# EUROPÄISCHE PATENTSCHRIFT

(11) **EP 2 292 400 B1**
(45) Veröffentlichungstag und Bekanntmachung des Hinweises auf die Patenterteilung: **17.02.2016**
(21) Anmeldenummer: 10009556.1
(22) Anmeldetag: 07.12.1999
(51) Int. Cl.: B29C 45/16, A46B 5/02

(54) **Durch Spritzgiessen hergestellte Zahnbürste und Spritzgiessverfahren**
Toothbrush produced by means of injection moulding and Injection moulding method
Brosse à dents fabriquée à l'aide du moulage par injection et procédé de moulage par injection.

(30) Priorität: 10.12.1998 CH 244898
(43) Veröffentlichungstag der Anmeldung: 09.03.2011
(62) Teilanmeldung aus: 03028055.6
(73) Patentinhaber: Trisa Holding AG, 6234 Triengen (CH)
(72) Erfinder: Huber, Beat, 6233 Büron (CH); Waldispuehl, Peter, 6234 Triengen (CH)
(74) Vertreter: Schaad, Balass, Menzl & Partner AG

(56) Entgegenhaltungen:
- WO-A1-97/02770
- WO-A1-98/35809
- DE-A1- 3 820 814
- DE-A1- 19 535 134

## Beschreibung

Die Erfindung betrifft eine durch Spritzgiessen hergestellte Zahnbürste gemäss dem Anspruchs 1 sowie ein Verfahren zur Herstellung dieser Zahnbürste.

Zahnbürsten sind Massenartikel und müssen daher kostengünstig hergestellt werden können. Bekannt sind Zahnbürsten aus einem einzigen Kunststoff und Zahnbürsten aus zwei Kunststoffkomponenten, die z.B. im Zweikomponenten-Spritzgiessverfahren hergestellt werden. Im letzteren Fall umfasst die Zahnbürste zwei Kunststoffteile: ein erstes Kunststoffteil aus einem ersten Kunststoff, z.B. Polypropylen, erstreckt sich vom Griff der Zahnbürste bis zum Bürstenkopf und weist miteinander verbundene Ausnehmungen auf. Ein zweites Kunststoffteil aus einem zweiten Kunststoff, z.B thermoplastisches Elastomer, füllt die Ausnehmungen des ersten Kunststoffteils aus. Diese beiden Kunststoffe verbinden sich an der Berührungsfläche der beiden Kunststoffteile. Gegenüber einer Zahnbürste aus nur einem Kunststoff ergibt dies eine grössere Gestaltungsmöglichkeit. Da sich jedoch die beiden Kunststoffe während des Spritzgiessvorganges miteinander verbinden müssen, ist man bei der Auswahl der Kunststoffe und damit bei der Gestaltung der Zahnbürste eingeschränkt.

Eine Zahnbürste der eingangs genannten Art und ein Verfahren zu deren Herstellung sind aus der DE-A-195 35 134 bekannt. An einen aus Kunststoff bestehenden Hauptkörper des Handgriffs einer Zahnbürste ist ein flexibler Kunststoff angespritzt. Um von vorneherein eine zuverlässige Verankerung des flexibleren Kunststoffs im Hauptkörper zu gewährleisten, ist der Hauptkörper mit einem zentralen Spritzkanal versehen, der von innen her mit äusseren Anspritzbereichen des flexibleren Kunststoffs an den Hauptkörper kommuniziert.

Aus der WO 97/02770 ist ferner ein Verfahren zum Herstellen einer Zahnbürste bekannt, bei dem zunächst ein Zahnbürstenkopf aus einem Kunststoffmaterial durch einen Kopfformungsvorgang hergestellt wird, wobei der Kopf an seinem Basisende ein erstes Eingriffsteil aufweist; und anschliessend ein Zahnbürstenhandgriff aus einem Kunststoffmaterial durch einen Griffformungsvorgang hergestellt wird, wobei während des Griffformungsvorgangs ein zweites Eingriffsteil an dem Kopfende des Griffes im Eingriff mit dem ersten Eingriffsteil gebildet wird, so dass der Eingriff zwischen dem ersten und dem zweiten Eingriffsteil den Kopf und den Handgriff zusammen hält.

Es ist ferner in der Spritzgiesstechnolgie allgemein bekannt, dass kraftschlüssige Verbindungen durch Schwindprozesse realisiert werden können, z.B. beim Umspritzen von sogenannten "Inserts" mit Kunststoff.

Der vorliegenden Erfindung liegt die Aufgabe zugrunde, eine Zahnbürste der eingangs genannten Art bereitzustellen, bei der bei einer kostengünstigen Herstellung eine vielfältige Gestaltung möglich ist.

Diese Aufgabe wird erfindungsgemäss mit einer Zahnbürste mit den Merkmalen des Anspruches 1 gelöst. Das Verfahren zur Herstellung einer solchen Zahnbürste zeichnet sich erfindungsgemäss durch die Merkmale des Anspruchs 10 aus.

Bevorzugte Weiterausgestaltungen der erfindungsgemässen Zahnbürste bzw. des erfindungsgemässen Verfahrens bilden Gegenstand der abhängigen Ansprüche.

Stehen die beiden Formteile der Zahnbürste miteinander in einer kraft- und/oder formschlüssigen Verbindung, bieten sich viele Möglichkeiten für eine zweckmässige Gestaltung der Zahnbürste. Dies insbesondere dann, wenn diese beiden Formteile aus verschiedenen, sich während des Spritzgiessvorganges miteinander nicht verbindenden Kunststoffen bestehen. Es können Kunststoffe mit unterschiedlichem chemischen Charakter verwendet werden. Diese können sich mehr oder weniger stark in ihrer Strukturformel und ihren chemischen Bausteinen unterscheiden. An den Berührungsflächen müssen zwischen den Kunststoffen keinerlei chemische oder physikalische Bindungen, z.B. in Form von Brückenbindungen oder Van der Waalschen Kräften, vorliegen. Allein die Reibungskräfte zwischen den Formteilen in der vorzugsweise als Schwindverbindung ausgebildeten Verbindung reichen aus, um die beiden Formteile fest miteinander zu verbinden.

Durch die formschlüssige, mittels ineinander greifenden Teilen an den Berührungsflächen der beiden Formteile realisierte Verbindung wird verhindert, dass sich zwischen den beiden Formteilen während des Schwindvorganges Spalte bilden, in die Wasser und Verunreinigungen eindringen können, oder die gar zu einem Bruch führen könnten.

So können beispielsweise bei einer Zahnbürste am richtigen Ort Kunststoffe mit vorteilhaften Eigenschaften eingesetzt werden. Das eine Formteil kann z.B. aus Polypropylen bestehen (Polypropylen ist günstig, flexibel, chemisch resistent, jedoch nicht voll transparent erhältlich), während für das andere Formteil beispielsweise Styrol-Acryl-Nitril (SAN) gewählt werden kann (ebenfalls günstig, transparent, ästhetisch). Vorzugsweise wird das den Bürstenkopf tragende Formteil aus Polypropylen hergestellt, da Polypropylen gegen die oft aggressiven Stoffe der Zahnputzmittel resistent ist.

Vorzugsweise werden Kunststoffe mit einem unterschiedlichen Schwindverhalten eingesetzt, da so eine feste Schwindverbindung leichter zu erreichen ist. In diesem Fall wird vorzugsweise in einem ersten Schritt dasjenige Formteil gespritzt, das aus Kunststoff mit dem geringeren Schwindmass hergestellt wird. In einem zweiten Schritt wird das zweite Formteil aus Kunststoff mit dem grösseren Schwindmass gespritzt, wodurch ein natürlicher Anpressdruck des zweiten Kunststoffes gegenüber dem ersten erzielt wird.

Die Erfindung wird im Folgenden anhand der Zeichnung näher erläutert.

Es zeigen:
- Fig. 1: ein erstes Ausführungsbeispiel einer aus zwei Formteilen bestehenden Zahnbürste in Seitenansicht und teilweise im Längsschnitt;
- Fig. 2: die Zahnbürste nach Fig. 1 in Draufsicht;
- Fig. 3: die Zahnbürste nach Fig. 1 in Untersicht;
- Fig. 4: ein erstes Formteil der Zahnbürste nach Fig. 1 in Ansicht und teilweise im Längsschnitt;
- Fig. 5: das Formteil nach Fig. 4 in Draufsicht;
- Fig. 6: ein zweites Formteil der Zahnbürste nach Fig. 1 in Draufsicht;
- Fig. 7: einen Schnitt nach Linie VII-VII in Fig. 6;
- Fig. 8: eine Verbindungsstelle der beiden Formteile nach Fig. 1 im vergrösserten Massstab;
- Fig. 9: im vergrösserten Massstab einen Schnitt nach Linie IX-IX in Fig. 2;
- Fig. 10: ein zweites Ausführungsbeispiel einer aus zwei Formteilen bestehenden Zahnbürste in Seitenansicht;
- Fig. 11: die Zahnbürste nach Fig. 10 in Draufsicht; und
- Fig. 12: die Zahnbürste nach Fig. 10 im vergrösserten Massstab, in Seitenansicht und teilweise im Schnitt, wobei ein Verschlussteil zum Verschliessen eines Handgriff-Hohlraumes vom übrigen Zahnbürstenteil getrennt dargestellt ist.

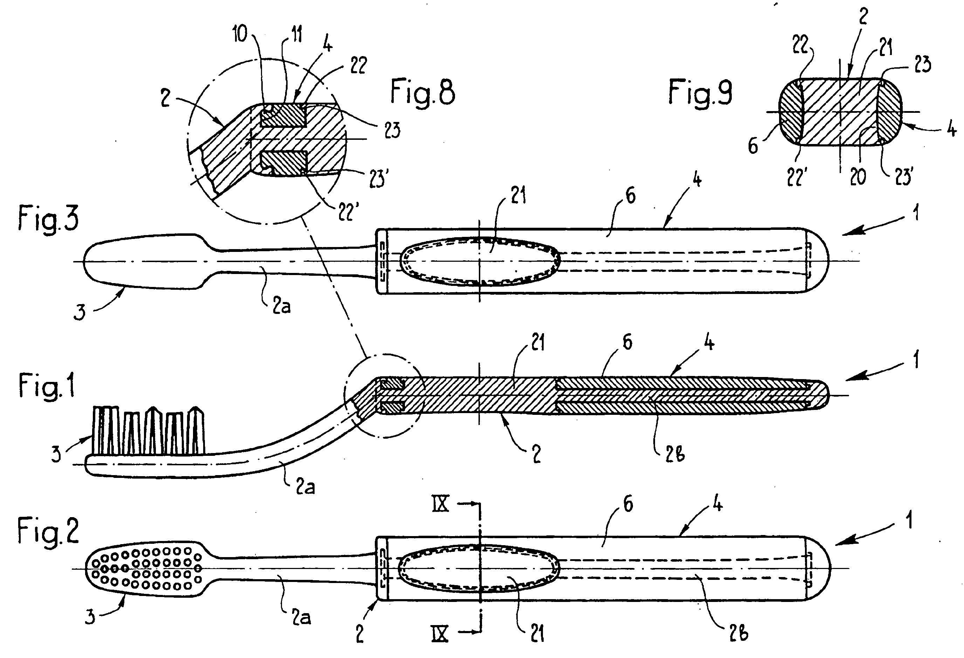

Gemäss Fig. 1 bis 3 weist eine Zahnbürste 1 ein erstes Formteil 2 auf, das in seinem vorderen Bereich 2a einen Bürstenkopf 3 trägt. Das erste, aus einem Kunststoff A bestehende Formteil 2 ist über einen Abschnitt seiner Länge, nämlich in seinem hinteren Handgriffbereich 2b, von einem zweiten, aus einem Kunststoff B bestehenden Formteil 4 umfasst und mit diesem in einer Art Schwindverbindung kraftschlüssig verbunden. Bei den Kunststoffen A und B handelt es sich um derartige Kunststoffe, die sich während des Spritzgiessvorganges an den Berührungsflächen nicht miteinander verbinden.

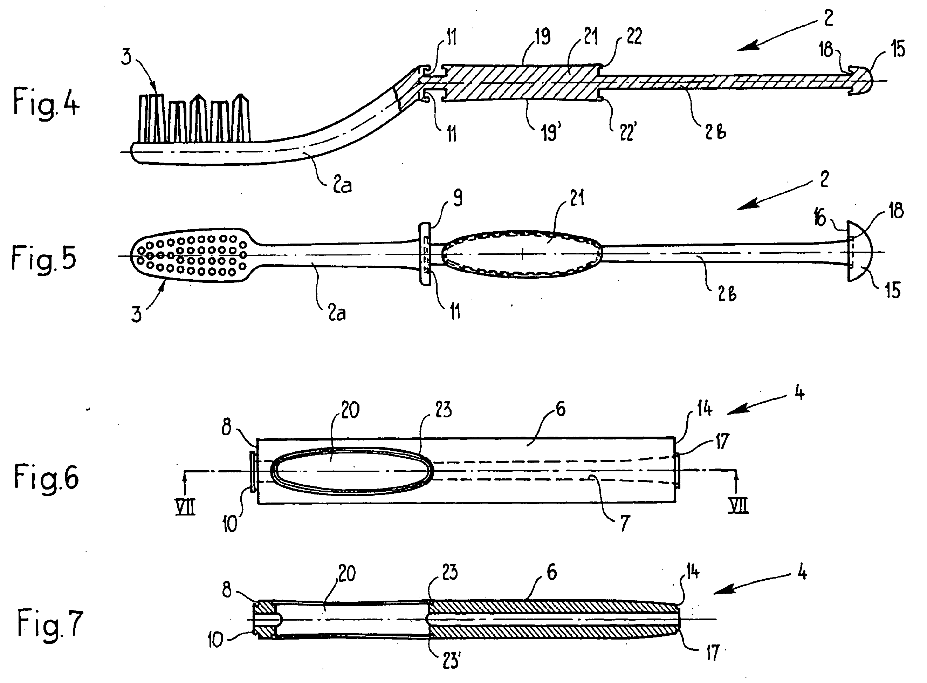

Zwecks besserer Anschaulichkeit sind die beiden Formteile 2, 4 in Fig. 4 bis 7 voneinander getrennt dargestellt. Die beiden Formteile 2, 4 weisen - wie weiter unten beschrieben wird - in ihrem Berührungsbereich gegengleiche, ineinandergreifende Vorsprünge bzw. Ausnehmungen auf, mittels welcher heben der kraftschlüssigen Verbindung beider Formteile 2, 4 zusätzlich eine formschlüssige Verbindung derselben realisiert wird. Diese Verbindung entsteht selbstverständlich erst während des Spritzgussvorganges, bei dem in einem ersten Schritt eines der Formteile und danach in einem zweiten Schritt das andere Formteil um das eine herum oder in dieses hinein gespritzt wird. Mit Vorteil wird beim unterschiedlichen Schwindmass beider Formteile 2, 4 zuerst dasjenige Formteil gespritzt, das aus Kunststoff mit geringerem Schwindmass hergestellt werden soll. Im zweiten Schritt erfolgt Spritzgiessen des anderen Formteils aus Kunststoff mit grösserem Schwindmass, wodurch ein natürlicher Anpressdruck des zweiten Kunststoffes gegenüber dem ersten Kunststoff entsteht.

Das zweite, in Fig. 6 und 7 einzeln dargestellte und im wesentlichen den Zahnbürsten-Handgriff bildende Formteil 4 ist hülsenförmig ausgestaltet, d.h. mit einer inneren Längsbohrung 7 versehen, die in ihrer Form und Durchmesser dem hinteren Handgriffbereich 2b des ersten, in Fig. 4 und 5 einzeln dargestellten Formteils 2 entspricht. Das hülsenförmige Formteil 4 weist eine Aussenfläche 6 auf.

Eine vordere Stirnfläche 8 des hülsenförmigen zweiten Formteils 4 ist in Längsrichtung der Zahnbürste gesehen einer Absatzfläche 9 des ersten Formteils 2 (Fig. 4) zugeordnet. Dabei ragt ein ringförmiger, vorderer Vorsprung 10 des zweiten Formteils 4 in eine gegengleiche Ausnehmungen 11 des ersten Formteils 2 hinein, was insbesondere aus Fig. 8 gut ersichtlich ist. Eine hintere Stirnfläche 14 des hülsenförmigen zweiten Formteils 4 ist einer Absatzfläche 16 eines Endstückes 15 des ersten Formteils 2 zugeordnet. Auch hier ragt ein ringförmiger, hinterer Vorsprung 17 des zweiten Formteils 4 in eine gegengleiche Ausnehmung 18 des Endstückes 15 hinein.

Das zweite Formteil 4 ist mit einer quer zur Längsbohrung 7 angeordneten, im Querschnitt ovalen, länglichen Querbohrung 20 ausgestattet, die für einen gegengleichen, die Querbohrung 20 durchdringenden Teil 21 des ersten Formteils 2 vorgesehen ist. Der ovale Teil 21 weist eine obere und eine untere Randfläche 22, 22' auf. Das zweite Formteil 4 ist mit die Querbohrung 20 umrandenden, den Randflächen 22, 22' gegengleichen Absatzflächen 23, 23' versehen. Die Randflächen 22, 22' und die Absatzflächen 23, 23' bilden wiederum eine Art Vorsprung/Ausnehmung-Formschlussverbindung zwischen den beiden Formteilen 2, 4.

Die Aussenfläche 6 des hülsenförmigen Formteils 4 bildet zusammen mit Aussenflächen 19, 19' (Fig. 4) des ovalen Teiles 21 eine Handgrifffläche.

Was Material für die beiden Formteile 2, 4 anbelangt kann als Kunststoff A für das erste Formteil 2 mit Vorteil beispielsweise Polypropylen (PP) gewählt werden, während das zweite Formteil 4 beispielsweise aus folgenden Kunststoffen B bestehen kann:
Styrol-Acryl-Nitril (SAN) und Untergruppen,
Acryl-Butadien-Styrol (ABS) und Untergruppen,
Polyamid (PA) und Untergruppen,
Polycarbonat (PC) und Untergruppen,
Polyester (PBT) und Untergruppen, oder andere transparente, sich mit Polypropylen (PP) nicht verbindende Kunststoffe.

Die jeweiligen Untergruppen umfassen die zur entsprechenden Familie gehörenden Kunststoffe.

Durch diese Materialkombination ergibt sich ein besonderer Vorteil. Da die heutigen Zahnputzmittel häufig aggressive Substanzen, wie z.B. Pfefferminzöl, enthalten, werden billige Kunststoffe wie z.B. SAN oft angegriffen. Ist das erste, den Bürstenkopf 3 tragende Formteil 2 aus gegen die aggressiven Stoffe resistentem, aber nicht vollständig durchsichtigem PP und das zweite, den Griff beinhaltende Formteil 4 aus durchsichtigem, aber weniger beständigem SAN, so liegt in dieser speziellen Ausgestaltungsform der Erfindung eine kostengünstig herstellbare Zahnbürste vor, die gegen die aggressiven Stoffe der Zahnputzmittel beständig ist und auch ästhetisch zu gefallen vermag. Natürlich kann statt des PP auch jeder andere beständige Kunststoff und statt des SAN beispielsweise einer der oben genannten, billigeren und in der Regel daher weniger beständigeren Kunststoffe verwendet werden.

Bei diesen Materialkombinationen wird in einem ersten Schritt vorzugsweise zuerst das zweite, hülsenförmige Formteil 4 mittels Spritzgiessens hergestellt. Anschliessend wird in einem zweiten Schritt das erste Formteil 2 gespritzt, wobei die bereits beschriebene formschlüssige Verbindung im Berührungsbereich beider Formteile 2, 4 entsteht. Durch das grössere Schwindmass des zuletzt gespritzten Materials A (PP) des ersten Teiles 2 entsteht ein natürlicher Anpressdruck gegenüber dem aus Material B (z.B. SAN) bestehenden zweiten Teil 4, und es wird eine kraft- und formschlüssige Verbindung beider Formteile 2, 4 durch Ineinandergreifen der Vorsprünge 10, 17, 22, 22' in Ausnehmungen 11, 18, 23, 23' bewerkstelligt, ohne dass sich zwischen den sich eigentlich nicht verbindenden Kunststoffen A, B Spalte bilden, in die Wasser und Verunreinigungen eindringen können oder die gar zu einem Bruch führen könnten.

Als Beispiel wurde eine aus zwei Formteilen 2, 4 bestehende Zahnbürste 1 dargestellt und beschrieben. Eine andere Ausgestaltung der beiden Formteile wäre durchaus möglich. Die hülsenförmige Ausgestaltung eines der Formteile ist nicht zwingend notwendig.

Selbstverständlich könnte eine Zahnbürste auch mehrere Formteile aus sich während des Spritzgiessvorganges miteinander nicht verbindenden Kunststoffen aufweisen, die miteinander in einer kraft- und/oder formschlüssigen Verbindung stehen.

Es könnten aber auch aus zwei oder mehreren Kunststoffkomponenten bestehende Formteile, bei denen z.B. eine (oder mehrere) Komponente des einen Formteiles mit einer (oder mehreren) Komponente des anderen Formteiles nicht verbindbar ist, miteinander kraft- und/oder formschlüssig verbunden werden.

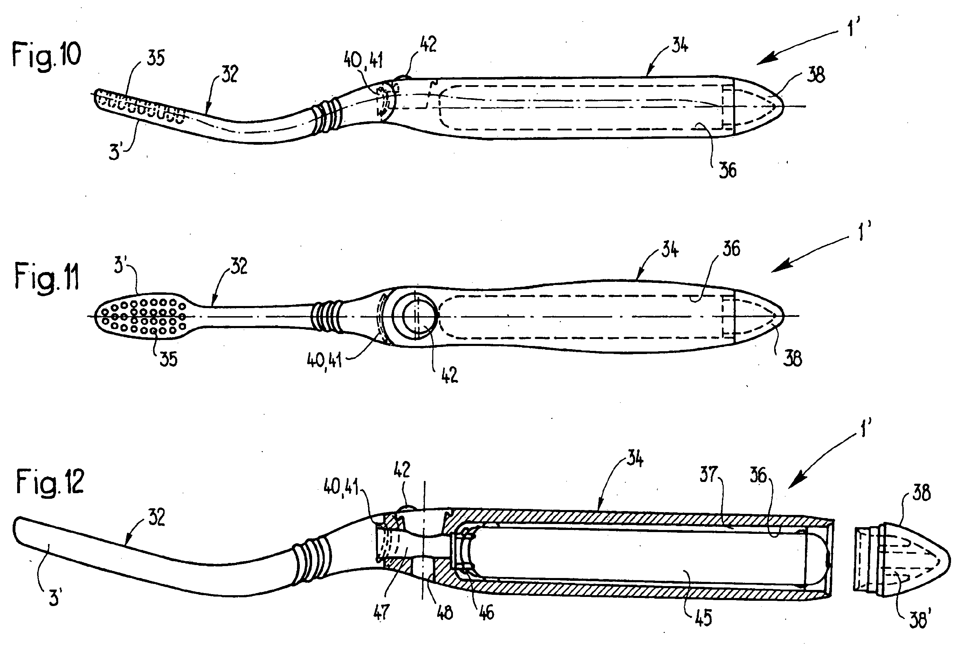

In Fig. 10 und 11 ist ein zweites Ausführungsbeispiel einer Zahnbürste 1' dargestellt, die ebenfalls zwei aus verschiedenen, sich während des Spritzgiessvorganges miteinander nicht verbindenden Kunststoffen A und B bestehende Formteile 32, 34 aufweist. Auch hier bildet das erste Formteil 32 einen den Bürstenkopf 3' tragenden Zahnbürstenteil (in Fig. 10 und 11 sind die Borsten des Bürstenkopfes 3' nicht dargestellt; es sind lediglich die zur Verankerung von Borstenbüscheln vorgesehene Vertiefungen 35 ersichtlich). Das zweite Formteil 34 bildet einen Zahnbürsten-Handgriff. Dieser ist über einen Teil seiner Länge mit einer zylindrischen Aussparung 36 versehen, durch welche ein nach hinten offener und mittels eines Verschlussteils 38 verschliessbarer Hohlraum 37 im Zahnbürsten-Handgriff gebildet ist. Das zweite Formteil 34 besteht vorzugsweise aus einer wenigstens teilweise transparenten oder transluzenten Materialkomponente, beispielsweise SAN, so dass im Hohlraum 37 verschiedene ästhetisch wirkende Mittel sichtbar untergebracht werden können (lose Gegenstände, Flüssigkeit, Pulver, bedruckte Rollen etc.). Der Verschlussteil 38 kann unlösbar oder lösbar mit dem zweiten Formteil 34 verbunden werden. Im letzteren Fall können im Hohlraum 37 beispielsweise auch Nutzgegenstände wie Zahnstocher oder Ampulle mit Mundwasser oder Zahnpasta untergebracht werden.

Auch bei dieser Zahnbürsten-Ausführungsform sind die Berührungsflächen beider Formteile 32, 34 mit ineinandergreifenden Teilen 40, 41 versehen, so dass die beiden Kunststoffteile beim Spritzgiessen in eine kraft- und formschlüssige Verbindung gebracht werden. Die ineinandergreifenden Teile 40, 41 sind beispielsweise durch einen Vorsprung 40 an der Stirnseite des den Handgriff bildenden Formteils 34 und eine gegengleiche Ausnehmung 41 an der Stirnseite des anderen Formteils 32 gebildet.

Wird der Handgriff aus dem transparenten SAN hergestellt, so wird auch bei dieser Ausführungsform vorzugsweise zuerst dieses handgriffbildende Formteil 34 im Spritzgiessverfahren hergestellt und anschliessend das den Bürstenkopf tragende Formteil 32 beispielsweise aus beständigerem Polypropylen gespritzt.

Sowohl der borstentragende Teil der Zahnbürste als auch der Handgriff können aus weiteren Materialkomponenten bestehende Teile aufweisen. So kann z.B. im Formteil 34 eine Vertiefung für eine Daumenauflage 42 aus einer weiteren Materialkomponente, beispielsweise aus einem thermoplastischen Elastomer (TPE), vorgesehen.

Die in Fig. 12 gezeigte Zahnbürste entspricht der Zahnbürste 1' nach Fig. 10 und 11, ist jedoch gegenüber der Fig. 10 in einem vergrösserten Massstab und teilweise im Schnitt dargestellt (die gleichen Teile sind mit den gleichen Bezugsziffern bezeichnet). Diese Zahnbürste 1' ist zum Einsetzen von verschiedentlich gefüllten Ampullen 45 vorgesehen, für die eine Halterung 46 aus einem elastisch nachgiebigen Kunststoff im vorderen Bereich der Aussparung 36 vorhanden ist. Der Verschlussteil 38 ist im Innern mit einer elastisch nachgiebigen Gegenhalterung 38' versehen. Die Ampulle 45 wird durch die beiden Halterungen 36, 38' sowohl radial, als auch axial in ihrer Lage gehalten. Die Halterung 36 kann beispielsweise aus dem gleichen Kunststoff (vorzugsweise aus PP) und im gleichen Schritt mit dem den Bürstenkopf 3' tragenden Formteil 32 gespritzt werden (der dafür vorhandene Verbindungskanal ist in Fig. 12 mit 47 bezeichnet). Aus dem gleichen Kunststoff und im gleichen Schritt kann auch eine Querbohrung 48 im zuerst gespritzten Formteil 34 (beispielsweise aus SAN) gefüllt werden, wodurch auf der Aussenseite des Handgriffes die Daumenauflage 42 gebildet wird.

Die Ampullen 45 können verschiedene ästhetisch wirkende Gegenstände (lose oder in einer Flüssigkeit schwebend), Flüssigkeit, Pulver etc. beinhalten.

## Patentansprüche

1. Durch Spritzgiessen hergestellte Zahnbürste mit einem ersten, aus einem ersten Kunststoff bestehenden Formteil (2; 32), das in seinem vorderen Bereich (2a) einen Bürstenkopf (3) aufweist, und einem zweiten, aus einem zweiten Kunststoff bestehenden Formteil (4; 34), das zumindest einen Teil des hinteren Bereichs eines Handgriffs bildet, wobei eine beim Spritzgiessen gebildete, formschlüssige Verbindung zwischen den beiden Formteilen (2, 32; 4, 34) vorhanden ist, die aus wenigstens an einem Teil der Berührungsfläche (8, 9; 14, 16) beider Formteile (2, 32; 4, 34) vorgesehenen, ineinander greifenden Teilen (10, 11; 17, 18; 22, 23; 22', 23'; 40, 41) der beiden Formteile (2, 32; 4, 34) besteht und dass wenigstens eines der Formteile (2; 32; 4, 34) mindestens einen weiteren Teil aus einem weiteren Material, nämlich einem thermoplastischen Elastomer, aufweist, wobei die Formteile (2; 32; 4; 34) aus verschiedenen, sich während des Spritzgiessvorganges miteinander nicht verbindenden Kunststoffen gebildet sind und dass das erste Formteil (2; 32) in das zweite Formteil (4; 34) hinein gespritzt ist.

2. Zahnbürste nach Anspruch 1, wobei sowohl das erste Formteil (2; 32) wie auch das zweite Formteil (4, 34) mindestens einen weiteren Teil aus einem thermoplastischen Elastomer aufweist.

3. Zahnbürste nach Anspruch 1 oder 2, wobei der aus einem thermoplastischen Elastomer bestehende weitere Teil eine Daumenauflage (42) bildet.

4. Zahnbürste nach einem der Ansprüche 1 bis 3, wobei die formschlüssige Verbindung durch ineinandergreifende Vorsprünge (10, 17, 22, 22', 40) am einen Formteil (4; 34 bzw. 2; 32) und Ausnehmungen (11, 18, 23, 23', 41) am anderen Formteil (2; 32 bzw. 4; 34) gebildet ist.

5. Zahnbürste nach einem der Ansprüche 1 bis 4, wobei eines der Formteile (2; 32; 4; 34) aus Polypropylen besteht.

6. Zahnbürste nach einem der Ansprüche 1 bis 5, wobei eines der Formteile (2; 32; 4; 34) aus Styrol-Acryl-Nitril besteht.

7. Zahnbürste nach einem der Ansprüche 1 bis 4, wobei eines der Formteile (2; 32; 4; 34) aus Acryl-Butadien-Styrol, Polyamid, Polycarbonat oder Polyester besteht.

8. Zahnbürste nach einem der Ansprüche 1 bis 7, wobei eines der Formteile (2; 32; 4; 34) aus einem transparenten Kunststoff besteht.

9. Zahnbürste nach einem der Ansprüche 1 bis 8, wobei das erste Formteil (2; 32) einen, einen Teil des Handgriffs bildenden, hinteren Bereich (2b) aufweist.

10. Verfahren zur Herstellung einer Zahnbürste nach einem der Ansprüche 1 bis 9 mittels Spritzgiessen, wobei in einem ersten Schritt aus dem Kunststoff eines der Formteile (4, 34) und in einem zweiten Schritt aus dem andern Kunststoffe in dieses eine Formteil (4, 34) hinein das andere der Formteile (2, 32) gespritzt wird, und dass wenigstens eines der Formteile (2; 32; 4, 34) mit mindestens einem weiteren, aus einem weiteren Material, nämlich einem thermoplastischen Elastomer, bestehenden Teil versehen wird.

11. Verfahren nach Anspruch 10, wobei beide Formteile (2, 32; 4, 34) mit mindestens einem weiteren Teil aus einem thermoplastischen Elastomer versehen werden.

12. Verfahren nach Anspruch 10 oder 11, wobei zur Bildung der Formteile (2, 32; 4, 34) Kunststoffe mit unterschiedlichem Schwindmass verwendet werden, und im ersten Schritt dasjenige Formteil (2, 32; 4, 34) gespritzt wird, das aus dem Kunststoff mit geringerem Schwindmass hergestellt wird.

13. Verfahren nach einem der Ansprüche 10 bis 12, wobei im ersten Schritt dasjenige Formteil (4; 34), das zumindest einen Teil des hinteren Bereichs eines Handgriffs bildet, gespritzt wird, vorzugsweise aus einem transparenten Kunststoff, und im zweiten Schritt dasjenige Formteil (2; 32), das in seinem vorderen Bereich (2a) einen Bürstenkopf (3) aufweist, gespritzt wird.

14. Verfahren nach Anspruch 13, wobei im ersten Schritt das Formteil (4; 34), das zumindest einen Teil des hinteren Bereichs eines Handgriffs bildet, aus Styrol-Acryl-Nitril, Acryl-Butadien-Styrol, Polyamid, Polycarbonat oder Polyester gespritzt wird, und dass im zweiten Schritt das Formteil (2; 32), das in seinem vorderen Bereich (2a) einen Bürstenkopf (3) aufweist, aus Polypropylen gespritzt wird.

15. Verfahren nach Anspruch 13 oder 14, wobei am Formteil (4; 34), das zumindest einen Teil des hinteren Bereichs eines Handgriffs bildet und vorzugsweise hülsenförmige ausgestaltet ist, eine vordere und eine hintere Stirnfläche (8, 14) ausgebildet werden, und im andern Formteil (2; 32), das in seinem vorderen Bereich (2a) einen Bürstenkopf (3) aufweist, eine vordere Absatzfläche (9), die mit der vorderen Stirnfläche (8) zusammenwirkt, sowie eine hintere Absatzfläche (16), die mit der hinteren Stirnfläche (14) zusammenwirkt, ausgebildet werden.

16. Verfahren nach einem der Ansprüche 13 bis 15, wobei am Formteil (4; 34), das zumindest einen Teil des hinteren Bereichs eines Handgriffs bildet, zumindest an einer seiner Stirnflächen (8, 14) ein Vorsprung (10, 17) ausgebildet wird, und im andern Formteil (2; 32), das in seinem vorderen Bereich (2a) einen Bürstenkopf (3) aufweist, wenigstens eine Ausnehmung (11, 18), in die der Vorsprung (10, 17) hineinragt, ausgebildet wird.

17. Verfahren nach einem der Ansprüche 13 bis 16, wobei am Formteil (4; 34), das zumindest einen Teil des hinteren Bereichs eines Handgriffs bildet, eine Querbohrung (20) ausgebildet wird, und im andern Formteil (2; 32), das in seinem vorderen Bereich (2a) einen Bürstenkopf (3) aufweist, ein die Querbohrung (20) durchdringender Teil (21) ausgebildet wird.

## Claims

1. Toothbrush produced by injection molding with a first molded part (2; 32) made of a first plastic material, having a brush head (3) in its front region (2a), and a second molded part (4; 34) made of a second plastic material, forming at least part of a rear region of a handle, wherein a positive fit formed during the injection-molding between the two molded parts (2, 4; 32, 34) is present, consisting of parts (10, 11; 17, 18; 22, 23; 22', 23'; 40, 41) of the two molded parts (2, 4; 32, 34) provided at least on a part of the contact surface (8, 9; 14, 16) of the two molded parts (2, 4; 32, 34) and engaging in one another, and wherein at least one of the molded parts (2, 4; 32, 34) has at least a further part made of a further material, namely a thermoplastic elastomer, wherein the molded parts (2, 4; 32, 34) are formed from different plastic materials which do not bond with each other during injection-molding and the first molded part (2; 32) is injection-molded into the second molded part (4; 34).

2. Toothbrush according to claim 1, wherein the first molded part (2; 32) as well as the second molded part (4; 34) has at least a further part made of a thermoplastic elastomer.

3. Toothbrush according to claim 1 or 2, wherein the further part made of a thermoplastic elastomer forms a thumb rest (42).

4. Toothbrush according to any one of claims 1 to 3, wherein the positive fit is formed by projections (10, 17, 22, 22', 40) on a molded part (4; 34 respectively 2; 32) and by recesses (11, 18, 23, 23', 41) on the other molded part (2; 32 respectively 4; 34) which engage in one another.

5. Toothbrush according to any one of claims 1 to 4, wherein one of the molded parts (2; 32; 4; 34) is made of polypropylene.

6. Toothbrush according to any one of claims 1 to 5, wherein one of the molded parts (2; 32; 4; 34) is made of styrene acrylonitrile.

7. Toothbrush according to any one of claims 1 to 4, wherein one of the molded parts (2; 32; 4; 34) is made of acrylonitrile-butadiene styrene, polyamide, polycarbonate or polyester.

8. Toothbrush according to any one of claims 1 to 7, wherein one of the molded parts (2; 32; 4; 34) is made of a transparent plastic material.

9. Toothbrush according to any one of claims 1 to 8, wherein the first molded part (2; 32) has a rear region (2b) forming a part of the handle.

10. Method of producing a toothbrush by means of injection molding according to any one of claims 1 to 9, wherein one of the molded parts (4; 34) is injection-molded from the plastic material in a first step and in a second step the other molded part (2; 32) is injection-molded from the other plastic material into the molded part (4; 34), and wherein at least one of the molded parts (2; 32; 4; 34) is provided with at least a further part made of a further material, namely a thermoplastic elastomer.

11. Method according to claim 10, wherein both molded parts (2, 32; 4, 34) are provided with at least a further part made of a thermoplastic elastomer.

12. Method according to claim 10 or 11, wherein plastic materials with different degree of shrinkage are used to form the molded parts (2, 32; 4, 34), and the molded part (2, 32; 4, 34) which is injection-molded in the first step is produced from the plastic material with a lower degree of shrinkage.

13. Method according to any one of claims 10 to 12, wherein the molded part (4; 34) forming at least part of the rear region of the handle is injection-molded in a first step, preferably from a transparent plastic material, and the molded part (2; 32) bearing a brush head (3) in its front region (2a) is injection-molded in a second step.

14. Method according to claim 13, wherein the molded part (4; 34) forming at least part of the rear region of the handle is injection-molded from styrene acrylonitrile, acrylonitrile-butadiene styrene, polyamide, polycarbonate or polyester in a first step, and the molded part (2; 32) bearing a brush head (3) in its front region (2a) is injection-molded from polypropylene in a second step.

15. Method according to claim 13 or 14, wherein a front and a rear end face (8; 14) are provided on the molded part (4; 34) forming at least part of the rear region of a handle and preferably designed in the form of a sleeve, and an offset surface (9) cooperating with the front end face (8) and a rear offset surface (16) cooperating with the rear end face (14) are provided on the other molded part (2; 32) bearing a brush head (3) in its front region (2a).

16. Method according to any one of claims 13 to 15, wherein a projection (10, 17) is provided on the molded part (4; 34), at least on one of its end faces (8; 14), forming at least part of the rear region of a handle, and at least a recess (11, 18), into which the projection (10, 17) extends, is provided on the other molded part (2; 32) bearing a brush head (3) in its front region (2a).

17. Method according to any one of claims 13 to 16, wherein a cross-bore (20) is provided on the molded part (4; 34) forming at least part of the rear region of a handle, and a part (21) penetrating through the cross-bore (20) is provided on the other molded part (2; 32) bearing a brush head (3) in its front region (2a).

## Revendications

1. Brosse à dents fabriquée par moulage par injection avec une première pièce moulée (2; 32) faite d'une première matière plastique, présentant une tête de brosse (3) dans sa région avant (2a), et une seconde pièce moulée (4; 34) faite d'une seconde matière plastique, formant au moins une partie d'une région arrière d'un manche, dans laquelle un assemblage par coopération formé pendant le moulage par injection entre les deux pièces moulées (2, 4; 32, 34) est présent, consistant en des parties (10, 11; 17, 18; 22, 23; 22', 23'; 40, 41) des deux pièces moulées (2, 4; 32, 34) prévues au moins sur une partie de la surface de contact (8, 9; 14, 16) des deux pièces moulées (2, 4; 32, 34) et s'engageant les unes dans les autres, et dans laquelle au moins une des pièces moulées (2, 4; 32, 34) présente au moins une autre partie faite d'une autre matière, à savoir un élastomère thermoplastique, dans laquelle les pièces moulées (2, 4; 32, 34) sont formées de différentes matières plastiques qui ne s'allient pas l'une avec l'autre pendant le moulage par injection et la première pièce moulée (2; 32) est moulée par injection dans la seconde pièce moulée (4; 34).

2. Brosse à dents selon la revendication 1, dans laquelle tant la première pièce moulée (2; 32) que la seconde pièce moulée (4; 34) présente au moins une autre partie faite d'un élastomère thermoplastique.

3. Brosse à dents selon la revendication 1 ou 2, dans laquelle l'autre partie faite d'un élastomère thermoplastique formant un appui pour le pouce (42).

4. Brosse à dents selon l'une quelconque des revendications 1 à 3, dans laquelle l'assemblage par coopération est formé par des saillies (10, 17, 22, 22', 40) sur une pièce moulée (4; 34 respectivement 2; 32) et par des creux (11, 18, 23, 23', 41) sur l'autre pièce moulée (2; 32 respectivement 4; 34) qui s'engagent les uns dans les autres.

5. Brosse à dents selon l'une quelconque des revendications 1 à 4, dans laquelle une des pièces moulées (2; 32; 4; 34) est faite de polypropylène.

6. Brosse à dents selon l'une quelconque des revendications 1 à 5, dans laquelle une des pièces moulées (2; 32; 4; 34) est faite de styrène-acrylo-nitrile.

7. Brosse à dents selon l'une quelconque des revendications 1 à 4, dans laquelle une des pièces moulées (2; 32; 4; 34) est faite d'acrylonitrile-butadiène-styrène, de polyamide, de polycarbonate ou de polyester.

8. Brosse à dents selon l'une quelconque des revendications 1 à 7, dans laquelle une des pièces moulées (2; 32; 4; 34) est faite d'une matière plastique transparente.

9. Brosse à dents selon l'une quelconque des revendications 1 à 8, dans laquelle la première pièce moulée (2; 32) présente une région arrière (2b) formant une partie du manche.

10. Procédé de fabrication d'une brosse à dents par moulage par injection selon l'une quelconque des revendications 1 à 9, dans lequel une des pièces moulées (4; 34) est moulée par injection de la matière plastique dans une première étape et dans une seconde étape l'autre pièce moulée (2; 32) est moulée par injection de l'autre matière plastique dans la pièce moulée (4; 34), et au moins une des pièces moulées (2; 32; 4; 34) est munie d'au moins une autre partie faite d'une autre matière, à savoir un élastomère thermoplastique.

11. Procédé selon la revendication 10, dans lequel les deux pièces moulées (2, 32; 4, 34) sont munies d'au moins une autre partie faite d'un élastomère thermoplastique.

12. Procédé selon la revendication 10 ou 11, dans lequel des matières plastiques avec différents degrés de contraction sont utilisés pour former les pièces moulées (2, 32; 4, 34), et la pièce moulée (2, 32; 4, 34) qui est moulée par injection dans la première étape est celle qui est fabriquée avec la matière plastique ayant un degré de contraction plus faible.

13. Procédé selon l'une quelconque des revendications 10 à 12, dans lequel la pièce moulée (4; 34) moulée par injection dans une première étape est celle qui forme au moins une partie de la région arrière du manche, préférablement avec une matière plastique transparente, et la pièce moulée (2; 32) moulée par injection dans une seconde étape est celle qui est munie d'une tête de brosse (3) dans sa région avant (2a).

14. Procédé selon la revendication 13, dans lequel la pièce moulée (4; 34) qui forme au moins une partie de la région arrière du manche est moulée par injection avec du styrène-acrylonitrile, du acrylonitrile-butadiène-styrène, du polyamide, du polycarbonate ou du polyester dans une première étape, et la pièce moulée (2; 32) qui est munie d'une tête de brosse (3) dans sa région avant (2a) est moulée par injection avec du polypropylène dans une seconde étape.

15. Procédé selon la revendication 13 ou 14, dans lequel une surface frontale avant et arrière (8; 14) sont prévues sur la pièce moulée (4; 34) qui forme au moins une partie de la région arrière d'un manche et qui est préférablement en forme de manchon, et une surface d'épaulement avant (9) associée avec la surface frontale avant (8) et une surface d'épaulement arrière (16) associée avec la surface frontale arrière (14) sont formées sur l'autre pièce moulée (2; 32) qui est munie d'une tête de brosse (3) dans sa région avant (2a).

16. Procédé selon l'une quelconque des revendications 13 à 15, dans lequel une saillie (10, 17) est formée sur la pièce moulée (4; 34), au moins sur une de ses surfaces frontales (8; 14), qui forme au moins une partie de la région arrière d'un manche, et au moins un creux (11, 18), dans lequel la saillie (10, 17) avance, est formé sur l'autre pièce moulée (2; 32) qui est munie d'une tête de brosse (3) dans sa région avant (2a).

17. Procédé selon l'une quelconque des revendications 13 à 16, dans lequel un trou transversal (20) est formé sur la pièce moulée (4; 34) qui forme au moins une partie de la région arrière d'un manche, et une partie (21) pénétrant à travers le trou transversal (20) est formée sur l'autre pièce moulée (2; 32) qui est munie d'une tête de brosse (3) dans sa région avant (2a).
